# FASCICULE DE BREVET EUROPEEN

(11) **EP 1 418 733 B1**
(45) Date de publication et mention de la délivrance du brevet: **27.02.2013**
(21) Numéro de dépôt: 03292683.4
(22) Date de dépôt: 28.10.2003
(51) Int. Cl.: H04L 29/12, H04L 12/46

(54) **Procédé pour attribuer à un terminal un idientifiant de réseau virtuel, terminal et serveur de configuration dynamique d'un hôte pour la mise en oeuvre de ce procédé**
Verfahren zum Zuweisen einer virtuellen Netzwerkidentifizierung zu einem Endgerät, Endgerät und DHCP-Server zur Durchführung dieses Verfahrens
Method for assigning a virtual network identifier to a terminal, terminal and dynamic host configuration server for implementing this method

(30) Priorité: 08.11.2002 FR 0214079
(43) Date de publication de la demande: 12.05.2004
(73) Titulaire: Alcatel Lucent, 75007 Paris (FR)
(72) Inventeur: Gass, Raymond, 67150 Bolsenheim (FR); Le Creff, Michel, 95450 Vigny (FR); Bastide, Patrick, 78380 Bougival (FR); Boullet, Marc, 92700 Colombes (FR)
(74) Mandataire: Sciaux, Edmond

(56) Documents cités:
- WO-A1-99/33211
- US-A1- 2002 009 078
- CISCO SYSTEMS ET AL: "Chapter 2: Campus Infrastructure Considerations" CISCO IP TELEPHONY NETWORK DESIGN GUIDE, [Online] 8 août 2001 (2001-08-08), XP002199423 Extrait de l'Internet: URL:http://www.cisco.com/univercd/cc/td/do c/product/voice/ip_tele/network/dgcampus.h tml> [extrait le 2002-05-21]
- ASOKAN N FLYKT P PERKINS C E: "AAA for IPv6 network access draft-ietf-perkins-aaav6-oo.txt" INTERNET DRAFT, XX, XX, 10 mars 2000 (2000-03-10), pages 1-28, XP002960144
- ANONYMOUS: "Avaya S8300 Media Server and Avaya S8700 Media Server in Extreme Networks' Infrastructure - Issue 1.0", AVAYA INC, 11 July 2002 (2002-07-11), XP002285986,
- HIBBS R B, LANE N: "Interpreting Client Options for the Dynamic Host Configuration Protocol", INTERNET-DRAFT, INTERNET ENGINEERING TASK FORCE, THE INTERNET SOCIETY, 14 October 1999 (1999-10-14), XP015016924,
- ANONYMOUS: 'Cisco CNS Network Registrar User's Guide, 5.0 (chapters 2, 10, 13)', [en ligne] Octobre 2000, CISCO SYSTEMS, INC Extrait de l'Internet: <URL:http://www.cisco.com/en/US/products/sw /netmgtsw/ps1982/products_user_guide_book09 186a00800ade25.html> [extrait le 2007-06-01]
- 'Cisco Network Registrar Software Version Comparison', [en ligne] 2007, CISCO SYSTEMS, INC Extrait de l'Internet: <URL:http://www.cisco.com/en/US/products/sw /netmgtsw/ps1982/prod_software_versions_com parison.html> [extrait le 2007-06-01]

## Description

L'invention concerne en particulier un procédé pour attribuer à un terminal un identifiant de réseau virtuel, dans un réseau local conforme à la norme IEEE 802.1Q. Cette norme permet de définir, utiliser, et administrer un réseau local constitué de plusieurs sous-réseaux logiques appelés réseaux locaux virtuels (Virtual Local Area Network ou VLAN). Ces sous-réseaux logiques peuvent éventuellement utiliser des technologies différentes au niveau liaison (Ethernet, Token Ring, etc) et ils sont reliés entre eux par des ponts. Des routeurs sont utilisés en outre pour établir des connexions entre des terminaux appartenant à des réseaux physiques quelconques. L'invention concerne plus particulièrement les réseaux locaux utilisant le protocole Internet pour le routage ; le protocole Ethernet, ou Token Ring, etc, étant utilisé pour les liaisons.

Un réseau local subdivisé en plusieurs réseaux virtuels permet de définir des groupes de terminaux pouvant échanger des données entre eux, quelle que soit l'architecture physique du réseau, et il permet éventuellement de restreindre ou d'interdire l'échange de données entre des terminaux appartenant à des groupes différents, pour des raisons de sécurité. Il est nécessaire aussi de créer au moins un réseau local virtuel pour utiliser des postes téléphoniques sur protocole Internet, dans un réseau local utilisé par ailleurs pour des transmissions classiques de données entre des ordinateurs par exemple. Un tel réseau virtuel est appelé réseau virtuel voix, et il permet de traiter de manière particulière les trames de données échangées par les terminaux téléphoniques : ces terminaux téléphoniques accèdent à des serveurs spécifiques pour les services téléphoniques, et les paquets de donnée de voix nécessitent une qualité élevée de transmission, parce qu'ils ne peuvent pas supporter de trop longs délais de transmission.

Pour exploiter des réseaux virtuels, un pont doit pouvoir distinguer, chaque fois qu'il reçoit une trame, à quel réseau virtuel appartient cette trame. La norme IEEE 802.1Q définit une trame permettant de distinguer explicitement une pluralité de réseaux virtuels.

Lorsqu'une nouvelle machine est connectée à un réseau local comportant plusieurs réseaux virtuels, il est nécessaire d'attribuer à cette machine une adresse Internet et un identifiant de réseau virtuel. Un protocole connu, appelé protocole de configuration dynamique d'un hôte, ou DHCP (« Dynamic Host Configuration Protocole »), permet d'initialiser et configurer dynamiquement une machine nouvellement connectée à un réseau utlisant le protocole Internet. Ce protocole est mis en oeuvre en exécutant un logiciel serveur sur l'une des machines du réseau, appelée serveur DHCP, et en exécutant des logiciels clients appelés clients DHCP respectivement dans les autres machines du réseau.

Lorsqu'une machine est mise en fonctionnement dans ce réseau, son client DHCP diffuse dans tout ou partie du réseau un paquet contenant une requête dite DHCP, qui signale au serveur DHCP la présence de cette nouvelle machine. Le serveur DHCP choisit une adresse Internet parmi les adresses non attribuées, dans un lot d'adresses prédéterminé. Le serveur DHCP fournit cette adresse à cette machine pour une durée prédéterminée. Après ce délais, cette adresse est considérée comme libre par le serveur. Il la réutilise pour une autre machine si la machine considérée n'a pas envoyée de message au serveur DHCP, entre temps, pour demander de nouveau l'attribution d'une adresse Internet.

Conformément au document IETF RFC 2131, le protocole DHCP fournit à chaque machine :
- une référence de transaction,
- une adresse Internet,
- une information de durée d'attribution de cette adresse Internet,
- l'adresse Internet du prochain serveur à utiliser pour l'amorçage de la machine,
- et un champ de paramètres optionnels.

On connaît deux procédés pour attribuer un identifiant de réseau virtuel. Un premier procédé consiste à configurer manuellement chaque machine pour lui indiquer son adresse de réseau virtuel. Ceci nécessite beaucoup de travail et de déplacements si le nombre de machines est élevé. Un second procédé connu consiste à configurer manuellement chacun des commutateurs Ethernet du réseau local, en lui indiquant un identifiant de réseau virtuel pour chaque terminal dont la présence est détectée par ce commutateur. L'identifiant de réseau virtuel est choisi par un administrateur en fonction :
- de l'adresse dite de Contrôle d'Accès au Médium, qui est propre à ce terminal,
- et du type de ce terminal.

Ce second procédé a pour inconvénient de nécessiter une intervention manuelle sur le commutateur Ethernet de rattachement de chaque nouvelle machine, en manipulant des informations de bas niveau sujettes à des erreurs.

Un procédé similaire nécessitant aussi de la configuration du commutateur de rattachement est divulgué par le document "CISCO IP TELEPHONY NETWORK DESIGN GUIDE", chapitre 2: "Campus Infrastructure Considerations" (extrait de l'Internet: http://www.cisco.com/univercd/cc/td/doc/product/voice/ip_tele/network/dgcampus.html).

Le document "Avaya S8300 Media Server and Avaya S8700 Media Server in Extreme Networks' Infrastructure - Issue 1.0" (extrait de l'Internet: http://downloads.avaya.com/css/P8/documents/003762719) divulgue un procédé qui consiste à utiliser un serveur de configuration DHCP pour envoyer un identifiant de réseau virtuel voix. Cet identifiant est reconnu seulement par les terminaux téléphoniques mais pas pour les terminaux informatiques.

Le but de l'invention est de simplifier encore plus la procédure d'installation d'une nouvelle machine.

L'objet de l'invention est un procédé pour attribuer à un terminal téléphonique un identifiant de réseau virtuel, dans un réseau local comportant plusieurs réseaux virtuels, et comportant un serveur de configuration dynamique d'un hôte tel que défini dans la revendication 1.

Le procédé ainsi caractérisé simplifie la procédure d'installation d'une nouvelle machine puisque c'est le serveur de configuration dynamique d'un hôte (Serveur DHCP) qui détermine automatiquement et fournit à la nouvelle machine un identifiant de réseau virtuel. Cet identifiant est déduit des informations sur le terminal, qui sont contenues dans le message diffusé par le terminal. Par exemple si c'est un terminal du type téléphone sur protocole Internet, un identifiant de réseau virtuel voix lui est attribué.

Selon un mode de mise en oeuvre particulier, le message comprend en outre une requête destinée au noeud de rattachement du terminal, et demandant à ce noeud de fournir des indications sur le port, de ce noeud, qui est connecté à ce terminal, en rajoutant ces indications à ce message ;
et ce procédé consiste à déduire, dans le serveur de configuration dynamique d'un hôte, un identifiant de réseau virtuel à partir de ces indications sur le port, et de ces informations sur le terminal.

Le procédé ainsi caractérisé permet d'attribuer automatiquement un identifiant de réseau virtuel avec des critères supplémentaires liés à la localisation du terminal. Cette localisation est obtenue à partir des indications sur le noeud de rattachement du terminal, et sur le port de rattachement à ce noeud, ces indications étant collectées par le message lorsqu'il transite par le noeud de rattachement pour aller du terminal au serveur DHCP. Ces informations de localisation indiquent par exemple que le terminal est situé dans un local où tous les téléphones appartiennent à un réseau virtuel particulier, propre à un service administratif par exemple.

Le procédé selon l'invention consiste en outre à interroger un serveur d'annuaire à partir des informations sur le terminal, pour en déduire un identifiant de réseau virtuel en fonction d'informations sur un utilisateur du terminal.

Le procédé ainsi caractérisé permet d'attribuer automatiquement un identifiant de réseau virtuel avec des critères encore plus fins, puisque liés aux fonctions de l'utilisateur, et pas seulement à la localisation du terminal, et au type du terminal.

L'invention a aussi pour objet un terminal et un serveur de configuration dynamique d'un hôte, pour la mise en oeuvre de ce procédé.

L'invention sera mieux comprise et d'autres caractéristiques apparaîtront à l'aide de la description ci-dessous et des figures l'accompagnant :
- La figure 1 représente un exemple de réseau local, dans lequel le procédé selon l'invention est mis en oeuvre.
- La figure 2 illustre une variante de mise en oeuvre du procédé selon l'invention, dans le même réseau local mais en faisant intervenir un serveur d'annuaire.

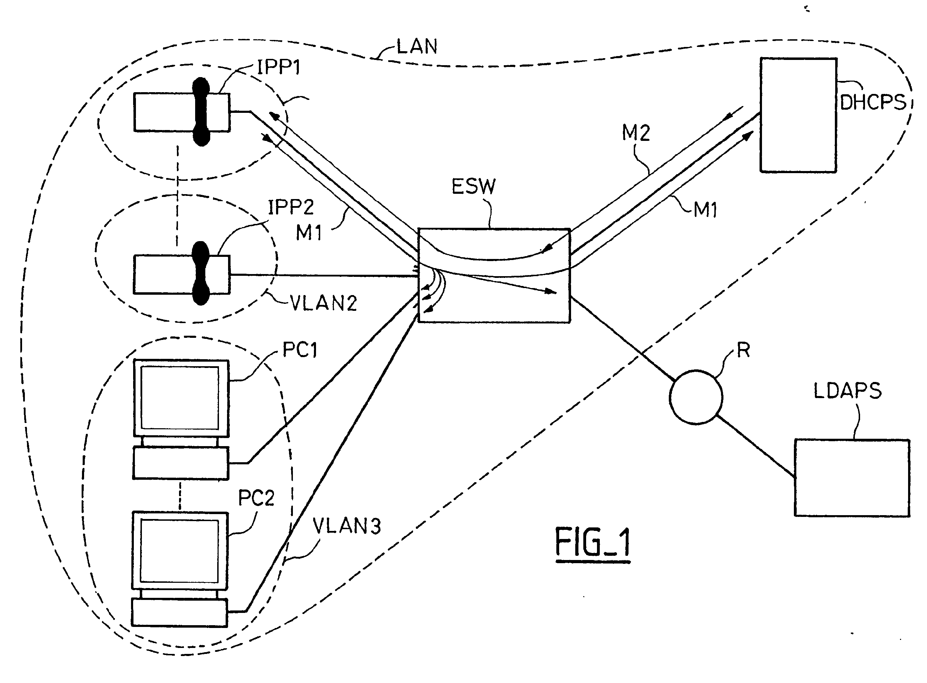

Sur la **figure 1**, cet exemple de réseau local LAN est utilisé pour la téléphonie dans deux réseaux virtuels voix, qui correspondent par exemple à deux services distinctes dans une entreprise ; et il est utilisé pour la transmission de données, dans un réseau virtuel données. Il comporte :
- Un réseau virtuel voix LAN1 comprenant des terminaux vocaux IPP1, ..., qui sont des téléphones sur protocole Internet, ou d'autres machines informatiques ayant notamment la fonction de téléphone sur protocole Internet, par exemple des ordinateurs personnels exécutant des logiciels de téléphonie.
- Un réseau virtuel voix LAN2 comprenant des terminaux vocaux IPP2, ..., qui sont des téléphones sur protocole Internet, ou d'autres machines informatiques ayant notamment la fonction de téléphone sur protocole Internet, par exemple des ordinateurs personnels exécutant des logiciels de téléphonie.
- Un réseau virtuel données LAN3 comprenant des machines informatiques PC1, ... PC2, ne traitant pas la voix, par exemple des ordinateurs personnels utilisés seulement pour des applications de traitement de données.
- Un serveur DHCPS de configuration dynamique d'un hôte, mettant en oeuvre le protocole connu DHCP modifié conformément à l'invention.
- Un commutateur Ethernet ESW classique, relié à tous les éléments précédents par des liaisons Ethernet.

Le commutateur Ethernet ESW est relié, à l'extérieur du réseau local LAN, à un serveur d'annuaire LDAPS, via un routeur R. Ce serveur d'annuaire LDAPD dessert plusieurs sites d'une entreprise par exemple, et met en oeuvre le protocole LDAP classique, modifié conformément à l'invention.

Lorsqu'un terminal vocal, IPP1 par exemple, est mis en fonctionnement, il diffuse un message M1, via le commutateur ESW1, vers tous les noeuds appartenant au réseau LAN. Ce message M1 aboutit notamment au serveur DHCPS de configuration dynamique d'un hôte.

Selon un mode de réalisation préférentiel, ce message M1 est une requête DHCP classique dite en mode 82, c'est à dire contenant :
-- l'adresse dite de Contrôle d'Accès au Medium, du terminal IPP1 ;
-- une requête destinée au serveur de configuration dynamique d'un hôte DHCPS, et lui demandant notamment l'attribution d' un identifiant de réseau virtuel, pour ce terminal ;
-- et une requête destinée au noeud de rattachement du terminal, et demandant à ce noeud de fournir des indications sur le port, de ce noeud, qui est connecté à ce terminal, en rajoutant ces indications à ce message M1.
Mais conformément à l'invention, ce message M1 contient en outre (dans le champ de paramètres optionnels) des informations sur ce terminal IPP1 pour indiquer le type de ce terminal, en l'occurrence le terminal IPP1 est un téléphone sur protocole Internet.

Dans cet exemple de réseau, le noeud de rattachement du terminal IPP1 est le commutateur ESW. Ce dernier rajoute au contenu du message son adresse de Contrôle d'Accès au Medium, et le numéro du port sur lequel il a reçu ce message. Quand le message M1 arrive au serveur DHCPS, celui-ci interprète cette requête en mode 82, et attribue une adresse Internet libre, et un identifiant de réseau virtuel qui est fonction de toutes les informations contenues dans le message M1 :
- Le type de terminal permet de déduire que le terminal IPP1 doit appartenir à un réseau virtuel voix : VLAN1 ou VLAN2.
- Les informations topologiques permettent de déduire la localisation du terminal. Par exemple, les deux réseaux virtuels VLAN1 et VLAN2 correspondent à deux groupes de ports du commutateur ESW reliés respectivement aux locaux de deux services distincts de l'entreprise considérée. A partir d'une table prédéterminée faisant correspondre les numéros de port du commutateur ESW et les adresses de réseau virtuel VLAN1et VLAN2, le serveur DHCPS en déduit un identifiant de réseau virtuel pour le terminal IPP1: VLAN1 dans cet exemple.
Le serveur DHCPS envoie alors au terminal IPP1 un message d'accusé de réception, M2, conformément au mode dit 82 du protocole DHCP, ce message contenant l'adresse Internet de manière connue ; et contenant en outre, conformément à l'invention, l'identifiant de réseau virtuel (VLAN1). Le terminal IPP1 mémorise l'adresse Internet et l'identifiant de réseau virtuel qui lui sont ainsi attribués.

Le même procédé permet d'attribuer une adresse Internet et un identifiant de réseau virtuel VLAN3 à un terminal PC1, ..., PC2 exclusivement dédié au traitement de données, à partir de la connaissance du type de ce terminal.

Selon un mode de mise en oeuvre simplifié, le message M1 est une requête DHCP classique qui n'est pas en mode 82, c'est à dire contenant :
-- l'adresse dite de Contrôle d'Accès au Medium, du terminal IPP1 ;
-- et une option demandant un identifiant de réseau virtuel, pour ce terminal.

Elle ne contient pas de requête demandant au noeud de rattachement de fournir des indications sur le port, de ce noeud, qui est connecté à ce terminal, en rajoutant ces indications à ce message. Mais conformément à l'invention, ce message M1 contient en outre des informations sur le terminal IPP1 pour indiquer le type de ce terminal, en l'occurrence c'est un téléphone sur protocole Internet. L'attribution d'un identifiant de réseau virtuel est faite alors seulement en fonction du type de terminal : voix ou données. On ne peut plus distinguer les réseaux virtuels voix VLAN1 et VLAN2. Il n'y a qu'un seul réseau virtuel voix.

Dans d'autres modes de réalisation, le message M1 peut contenir plus d'informations sur le terminal :
■ Nature précise du terminal (téléphone sur protocole Internet, en précisant filaire
ou sans fil ; assistant numérique personnel, en précisant qu'il comporte une liaison radio supportant un lien Bluetooth de type voix par exemple ; un ordinateur embarquant un logiciel de téléphonie ; etc.)
■ Fabriquant.
■ Version de l'équipement (matériel ou logiciel).
■ Ancien identifiant de réseau virtuel, le cas échéant.
■ Nom de l'utilisateur habituel du terminal.

Le champ d'informations supplémentaires dans le message DHCP permet d'offrir une ouverture vers un grand nombre de services nouveaux, en transmission de données et en téléphonie :
■ Mobilité.
■ Facilité de la configuration pour les gestionnaires de réseau (données et téléphonie).
Avec certains terminaux offrant plusieurs types de communications (alternativement voix et données) la requête d'identifiant de réseau virtuel peut se faire à d'autre moment que celui de la connexion au réseau. Par exemple :
■ à la mise sous tension, un ordinateur individuel demande une adresse Internet, et un identifiant de réseau virtuel données ;
■ à un autre moment (qui peut ne pas correspondre à une mise sous tension) il envoie une autre requête pour obtenir un identifiant de réseau virtuel voix.
Lors de l'attribution de l'identifiant de réseau virtuel voix, le serveur DHCPS peut :
■ envoyer seulement l'identifiant de réseau virtuel voix ; dans ce cas l'ordinateur utilise l'adresse Internet déjà attribuée ;
■ ou envoyer, en plus de l'identifiant de réseau virtuel voix, l'adresse Internet déjà attribuée pour le service de données, ou une autre adresse Internet.

Les deux modes de fonctionnement sont possibles :
■ une même adresse Internet pour le service données et le service voix ;
■ ou des adresse Internet différentes pour le service données et le service voix.

Dans ce qui précède, il est supposé que le serveur DHCPS connaît les informations permettant d'envoyer au terminal les identifiants de réseau virtuel (voix et données). L'introduction de ces informations dans le serveur DHCPS peut se faire de plusieurs manières :
■ Un opérateur les introduit directement sur le serveur DHCPS soit manuellement soit par un support mémoire (disquette, CD ROM, etc.).
■ Le serveur DHCPS étant lui même dans un réseau, un autre serveur de ce réseau peut les lui transmettre. Cet autre serveur est par exemple un serveur d'annuaire contenant un grand nombre d'informations relatives aux utilisateurs du réseau (nom, numéro de téléphone, adresse Internet, type de terminaux, fonction dans l'entreprise - Directeur, Secrétaire, Marketing, R&D, Industrialisation - etc.)

Lors des échanges entre les serveurs, le serveur d'annuaire LDAPS peut mettre à jour les informations du serveur DHCPS. Il est aussi possible qu'à chaque sollicitation du serveur DHCPS par un terminal, le serveur DHCPS interroge le serveur LDAPS pour obtenir les informations à renvoyer au terminal. Ces échanges entre serveurs permettent de réduire considérablement les interventions humaines pour la configuration (évite des erreurs de saisie, et une charge de travail).

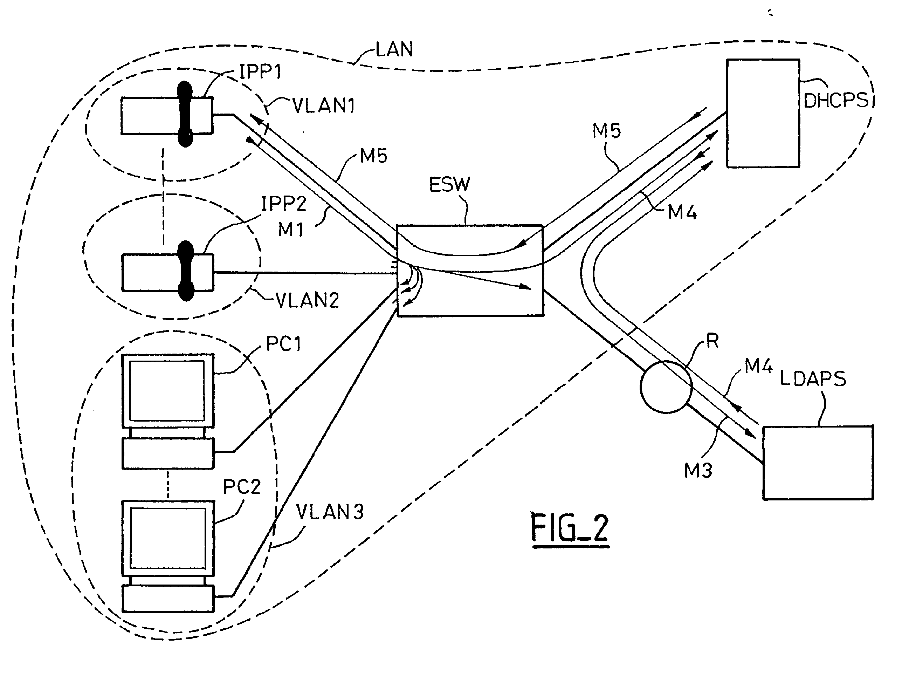

La **figure 2** illustre une variante de mise en oeuvre du procédé selon l'invention, dans le même réseau local LAN mais en faisant intervenir le serveur d'annuaire LDAPS. Quand il reçoit le message M1 précédemment décrit, le serveur DHCPS interroge le serveur LDAPS par un message M3 contenant l'adresse de Contrôle d'Accès au Medium du terminal, extraite du message M1, cette adresse étant associée à un nom d'utilisateur, et à ses fonctions, dans un annuaire. Le serveur LDAPS lui répond par un message M4 indiquant les fonctions de l'utilisateur. Le serveur DHCPS en déduit un identifiant de réseau virtuel correspondant à ces fonctions. Il envoie au terminal IPP1 un message M5, en mode 82, contenant l'adresse Internet et l'identifiant de réseau virtuel attribués au terminal IPP1.

Selon une variante de mise en oeuvre, le serveur LDAPS fournit directement un identifiant de réseau virtuel à partir de l'adresse de Contrôle d'Accès au Medium du terminal, et il envoie cet identifiant au serveur de configuration dynamique d'un hôte DHCPS.

Le procédé selon l'invention est applicable de manière analogue à d'autres réseaux comportant un plus grand nombre de commutateurs, ainsi que des ponts et des routeurs.

## Revendications

1. Procédé pour attribuer à un terminal téléphonique (IPPI) un identifiant de réseau virtuel, dans un réseau local (LAN) comportant plusieurs réseaux virtuels (VLAN1, ..., VLAN3), et comportant un serveur de configuration dynamique d'un hôte (DHCPS) ; consistant à :
- diffuser dans le réseau, à partir du terminal (IPP1), un message (M1) contenant :
-- des informations sur ce terminal comportant une indication indiquant que c'est un terminal téléphonique ;
-- une requête destinée au serveur de configuration dynamique d'un hôte (DHCPS) et demandant notamment l'attribution d'un identifiant de réseau virtuel, pour ce terminal ;
- et déduire, dans le serveur de configuration dynamique d'un hôte (DHCPS), un identifiant de réseau virtuel notamment à partir des informations sur ce terminal, et envoyer cet identifiant de réseau virtuel au terminal ;
le procédé consistant en outre à interroger un serveur d'annuaire (LDAPS), à partir des informations sur le terminal, pour en déduire cet identifiant de réseau virtuel spécifique pour la voix, sélectionné parmi plusieurs identifiants de réseau virtuel (VLAN1, ..., VLAN3) en fonction d'informations sur un utilisateur du terminal.

2. Procédé selon la revendication 1, **caractérisé en ce .que** le message (M1) comprend en outre une requête destinée au noeud (ESW) de rattachement du terminal, et demandant à ce noeud de fournir des indications sur le port, de ce noeud, qui est connecté à ce terminal, en rajoutant ces indications à ce message;
et ce qu'il consiste à déduire, dans le serveur de configuration dynamique d'un hôte (DHCPS), un identifiant de réseau virtuel à partir des indications sur le port, et des informations sur le terminal.

3. Serveur de configuration dynamique d'un hôte (DHCPS) pour un réseau local comportant plusieurs réseaux virtuels (VLAN1, ..., VLAN3), comportant :
- des moyens pour recevoir un message provenant d'un terminal, ce message contenant :
-- des informations sur ce terminal,
-- et une requête demandant notamment l'attribution d'un identifiant de réseau virtuel, pour ce terminal ;
- des moyens pour déduire un identifiant de réseau virtuel, notamment à partir des informations sur ce terminal, et envoyer cet identifiant de réseau virtuel au terminal ;
- des moyens pour détecter, dans les informations reçues sur ce terminal, une indication indiquant que c'est un terminal téléphonique ;
- des moyens pour interroger un serveur d'annuaire (LDAPS), à partir des informations sur le terminal, pour en déduire cet identifiant de réseau virtuel spécifique pour la voix, sélectionné parmi plusieurs identifiants de réseau virtuel (VLAN1, ..., VLAN3) en fonction d'informations sur un utilisateur du terminal.

4. Serveur de configuration dynamique d'un hôte (DHCPS) selon la revendication 3, **caractérisé :**
- **en ce que** les moyens pour recevoir un message provenant d'un terminal, sont capables de recevoir un message contenant des indications sur le port, d'un noeud, qui est connecté à ce terminal ;
- et **en ce que** les moyens pour déduire un identifiant de réseau virtuel à partir des informations sur ce terminal, puis envoyer cette adresse de réseau virtuel au terminal, sont capables de prendre en compte ces indications sur le port.

5. Terminal (IPP1) pour un réseau local (LAN) comportant plusieurs réseaux virtuels (VLAN1, ..., VLAN3), qui comporte des moyens pour diffuser, dans ce réseau local, un message (M1) destiné à un serveur de configuration dynamique d'un hôte (DHCPS) ; ce message contenant :
-- des informations sur ce terminal,
-- **caractérisé en ce que** le message contient une requête demandant notamment l'attribution d'un identifiant de réseau virtuel, pour ce terminal ;
-- une indication indiquant que c'est un terminal téléphonique ;
et **en ce que** ces moyens pour diffuser, dans ce réseau local, un message (M1) destiné à un serveur de configuration dynamique d'un hôte (DHCPS) sont capables de diffuser un message contenant en outre une requête destinée au noeud (ESW) de rattachement du terminal, et demandant à ce noeud de fournir des indications sur le port, de ce noeud, qui est connecté à ce terminal, en rajoutant ces indications à ce message.

## Claims

1. A method for assigning a virtual network identifier to a telephone terminal (IPP1), within a local area network (LAN) comprising multiple virtual networks (VLAN1,..., VLAN3), and comprising a dynamic host configuration server (DHCPS); consisting of:
- broadcasting within the network, from the terminal (IPP1), a message (M1) containing:
-- information about that terminal comprising an indication indicating that it is a telephone terminal;
-- a request intended for the dynamic host configuration server (DHCPS) and particularly requesting the assignment of a virtual network identifier, for that terminal;
- and deducing, within the dynamic host configuration server (DHCPS), a virtual network identifier, particularly based on the information about that terminal, and sending that virtual network identifier to the terminal;
the method further consisting of querying a directory server (LDAPS), based on the information about the terminal, in order to deduce from it that virtual network identifier specific to voice, selected from among several virtual network identifiers (VLAN1, ..., VLAN3) based on information about a user of the terminal.

2. A method according to claim 1, **characterized in that** the message (M1) further comprises a request intended for the terminal's assigned node (ESW), asking that node to provide indications about the port of that node that is connected to that terminal, by adding those indications to that message;
and **in that** it consists of deducing, within the dynamic host configuration server (DHCPS), a virtual network identifier, based on the indications about the port and the information about the terminal.

3. A dynamic host configuration server (DHCPS) for a local area network comprising multiple virtual networks (VLAN1, ..., VLAN3), comprising:
- means for receiving a message from a terminal, which message containing:
-- information about that terminal,
-- and a request particularly requesting the assignment of a virtual network identifier for that terminal;
- means for deducing a virtual network identifier, particularly based on information about that terminal, and sending that virtual network identifier to the terminal;
- means for detecting, in the information received about that terminal, an indication indicating that it is a telephone terminal;
- means for querying a directory server (LDAPS), based on information about the terminal, in order to deduce from it that virtual network identifier specific to voice, selected from among several virtual network identifiers (VLAN1, ..., VLAN3) based on information about a user of the terminal.

4. A dynamic host configuration server (DHCPS) according to claim 3, **characterized:**
- **in that** the means for receiving a message coming from a terminal are capable of receiving a message containing indications about the port of a node that is connected to that terminal;
- and **in that** the means for deducing a virtual network identifier based on information about that terminal, then sending that virtual network address to the terminal, are capable of taking into account those indications about the port.

5. A terminal (IPP1) for a local area network (LAN) comprising multiple virtual networks (VLAN1, VLAN3), which comprises means for broadcasting, within that local area network, a message (M1) intended for a dynamic host configuration server (DHCPS); which message contains:
-- information about that terminal,
-- **characterized in that** the message contains a request particularly requesting the assignment of a virtual network identifier for that terminal;
-- an indication indicating that it is a telephone terminal;
and **in that** those means for broadcasting, within that local area network, a message (M1) intended for a dynamic host configuration server (DHCPS) are capable of broadcasting a message further containing a request intended for the terminal's assigned node (ESW), asking that node to provide indications about the port of that node that is connected to that terminal, by adding those indications to that message.

## Patentansprüche

1. Verfahren zum Zuordnen einer Kennung eines virtuellen Netzwerks, in einem lokalen Netzwerk (LAN) mit mehreren virtuellen Netzwerken (VLAN1,..., VLAN3) und einem Server zur dynamischen Konfiguration eines Hosts (DHCPS) zu einem Telefongerät (IPP1), die folgenden Schritte umfassend:
- Übertragen in dem Netzwerk, ab dem Endgerät (IPP1), einer Nachricht (M1), welche enthält:
-- Informationen über dieses Endgerät, welche eine Angabe darüber enthält, dass es sich um ein Telefongerät handelt;
-- eine Anforderung, welche für den Server zur dynamischen Konfiguration eines Hosts (DHCPS) bestimmt ist und diesen insbesondere zur Zuordnung einer Kennung des virtuellen Netzwerks für dieses Endgerät auffordert;
- und Ableiten, im Server zur dynamischen Konfiguration eines Hosts (DHCPS), einer Kennung des virtuellen Netzwerks insbesondere von den Informationen über dieses Endgerät, und Senden dieser Kennung des virtuellen Netzwerks an das Endgerät;
wobei das Verfahren weiterhin darin besteht, ausgehend von den Informationen über das Endgerät einen Verzeichnisserver (LDAPS) abzufragen, um diese spezifische Kennung des virtuellen Netzwerks für die Sprache, ausgewählt unter mehreren Kennungen des virtuellen Netzwerks (VLAN1, ..., VLAN3) gemäß den Informationen über einen Benutzer des Endgeräts, davon abzuleiten.

2. Verfahren nach Anspruch 1, **dadurch gekennzeichnet, dass** die Nachricht weiterhin eine für den Heimatknoten (ESW) des Endgeräts bestimmte Anforderung enthält, welche diesen Knoten auffordert, Angaben über den Port dieses Knotens, welcher an dieses Endgerät angeschlossen ist, bereitzustellen und diese Angaben zu der Nachricht hinzuzufügen;
und dass es darin besteht, im Server zur dynamischen Konfiguration eines Hosts (DHCPS) eine Kennung dieses virtuellen Netzwerks von den Angaben über den Port und den Informationen über dieses Endgerät abzuleiten.

3. Server zur dynamischen Konfiguration eines Hosts (DHCPS) für ein lokales Netzwerk, welches mehrere virtuelle Netzwerke (VLAN1, ..., VLAN3) umfasst, umfassend:
- Mittel zum Empfangen einer von einem Endgerät ausgegebenen Nachricht, wobei diese Nachricht enthält:
-- Informationen über dieses Endgerät,
-- eine Anforderung, insbesondere für das Zuordnen einer Kennung des virtuellen Netzwerks, für dieses Endgerät;
- Mittel zum Ableiten einer Kennung des virtuellen Netzwerks, insbesondere von den Informationen über dieses Endgerät, und zum Senden dieser Kennung des virtuellen Netzwerks an das Endgerät;
- Mittel zum Erkennen, in den empfangenen Informationen über dieses Endgerät, einer Angabe darüber, dass es sich um ein Telefongerät handelt;
- Mittel zum Abfragen eines Verzeichnisservers (LDAPS), ausgehend von den Informationen über das Endgerät, um diese Kennung des spezifischen virtuellen Netzwerks für die Sprache, ausgewählt unter mehreren Kennungen des virtuellen Netzwerks (VLAN1, ..., VLAN3) gemäß den Informationen über einen Benutzer des Endgeräts, davon abzuleiten.

4. Server zur dynamischen Konfiguration eines Hosts (DHCPS) nach Anspruch 3, **dadurch gekennzeichnet,**
- **dass** die Mittel zum Empfangen einer von einem Endgerät ausgegebenen Nachricht fähig sind, eine Nachricht, welche Angaben über den Port eines Knotens, der an dieses Endgerät angeschlossen ist, zu empfangen,
- und **dass** die Mittel zum Ableiten einer Kennung des virtuellen Netzwerks von den Informationen über dieses Endgerät und zum anschließenden Senden dieser Adresse des virtuellen Netzwerks an das Endgerät fähig sind, diese Angaben auf dem Port zu berücksichtigen.

5. Endgerät (IPP1) für ein lokales Netzwerk (LAN) mit mehreren virtuellen Netzwerken (VLAN1, ..., VLAN3), welches Mittel zum Übertragen, in diesem lokalen Netzwerk, einer für einen Server zur dynamischen Konfiguration eines Hosts (DHCPS) bestimmten Nachricht umfasst, wobei diese Nachricht enthält:
-- Informationen über dieses Endgerät,
**dadurch gekennzeichnet, dass** diese Nachricht eine Anforderung insbesondere für die Zuordnung einer Kennung dieses virtuellen Netzwerks für dieses Endgerät enthält,
-- eine Angabe darüber, dass es sich um ein Telefongerät handelt;
und dass diese Mittel zum Übertragen, in diesem lokalen Netzwerk, einer für einen Server zur dynamischen Konfiguration eines Hosts (DHCPS) bestimmten Nachricht (M1) fähig sind, eine Nachricht zu übertragen, welche außerdem eine für einen Heimatknoten (ESW) des Endgeräts bestimmte Anforderung enthält, um diesen Knoten aufzufordern, Angaben über den Port dieses Knotens, welcher an dieses Endgerät angeschlossen ist, bereitzustellen und diese Angaben zu dieser Nachricht hinzuzufügen.
